# EUROPÄISCHE PATENTSCHRIFT

(11) **EP 4 514 184 B1**
(45) Veröffentlichungstag und Bekanntmachung des Hinweises auf die Patenterteilung: **09.09.2026**
(21) Anmeldenummer: 23715830.8
(22) Anmeldetag: 28.03.2023
(51) Int. Cl.: A47J 31/44, A47J 31/46, A47J 31/52

(54) **HEISSGETRÄNKEZUBEREITUNGSVORRICHTUNG MIT DAMPFLANZE**
APPARATUS FOR PREPARING HOT BEVERAGES HAVING STEAM LANCE
APPAREIL POUR LA PRÉPARATION DE BOISSONS CHAUDES AVEC BUSE À VAPEUR

(30) Priorität: 25.04.2022 DE 102022109867
(43) Veröffentlichungstag der Anmeldung: 05.03.2025
(73) Patentinhaber: FRANKE Kaffeemaschinen AG, 4663 Aarburg (CH)
(72) Erfinder: OGGIER, David, 6208 Oberkirch (CH); IOANNONE, Matteo, 8162 Steinmaur (CH)
(74) Vertreter: LBP Lemcke, Brommer & Partner Patentanwälte mbB
(86) Internationale Anmeldenummer: PCT/EP2023/058058
(87) Internationale Veröffentlichungsnummer: WO 2023/208500

(56) Entgegenhaltungen:
- EP-A1- 3 756 516
- DE-U1- 202021 101 017
- US-A- 4 852 474

## Beschreibung

Die vorliegende Erfindung betrifft eine Heißgetränkezubereitungsvorrichtung nach dem Oberbegriff des Anspruchs 1.

Heißgetränkezubereitungsvorrichtungen, insbesondere Kaffeemaschinen, werden häufig mit einer Vorrichtung zur Milchschaumerzeugung ausgestattet, um Kaffeegetränke wie Cappuccino oder Latte Macchiato zubereiten zu können. Neben Kaffeevollautomaten, die ein internes Milchsystem zur Ausgabe fertig aufgeschäumten Milchschaums aufweisen, werden häufig auch sogenannte Dampflanzen vorgesehen, über die Dampf ausgegeben werden kann, mit dem Milch in einem Milchgefäß aufgeschäumt werden kann. Dem Dampf kann hierbei auch Luft beigemischt werden, die zum Aufschäumen der Milch benötigt wird. Eine Aufschäumvorrichtung mit Dampflanze ist z.B. in der WO 2019/141409 A1 beschrieben.

Die Schrift EP 2 878 241 B1 beschreibt eine Kaffeemaschine mit einer Dampflanze, bei der in den Dampfausgabekanal auch eine Milchzuleitung einmündet, sodass über die Dampflanze in ein unter der Dampflanze positioniertes Milchgefäß zunächst Milch ausgegeben werden kann, die anschließend mit Dampf aufgeschäumt wird.

Die Schrift EP 3 756 516 A1 beschreibt eine Heißgetränkezubereitungsvorrichtung nach dem Oberbegriff des Anspruchs 1 mit einer Dampflanze, die neben dem Dampfausgabekanal einen zweiten, vom Dampfausgabekanal separaten Kanal aufweist, der an eine Milchzuleitung angeschlossen ist. Auch bei dieser Milchaufschäumvorrichtung kann somit zunächst über die Dampflanze Milch ausgegeben und anschließend aufgeschäumt werden.

Nachteilig an einer Milchausgabe über die Dampflanze ist jedoch, dass aufgrund der bei einer Dampfausgabe erreichten hohen Temperaturen Milchreste im Inneren der Dampflanze insbesondere im Bereich der Einmündung der Milchzuleitung denaturieren und festbacken können. Da die Dampflanze im Inneren schlecht gereinigt werden kann, führt dies mit der Zeit zu hygienischen Problemen.

Eine Aufgabe der Erfindung besteht darin, eine Heißgetränkezubereitungsvorrichtung mit Dampflanze anzugeben, bei der derartige hygienische Probleme nicht auftreten. Daneben sollen nach Möglichkeit vegane Produkte angeboten werden können und/oder Produkte für Kunden/Konsumenten mit Lebensmittelallergien bzw. -unverträglichkeiten auf bestimmte Milchsorten oder -bestandteile.

Die Aufgabe wird gelöst durch die Merkmale des Anspruchs 1. Vorteilhafte Ausgestaltungen sind den abhängigen Ansprüchen zu entnehmen.

Bei einer Heißgetränkezubereitungsvorrichtung der eingangs genannten Art ist vorgesehen, dass der Milchauslass räumlich getrennt von der Dampflanze hinter dieser angeordnet ist und derart oberhalb des freien Endes der Dampflanze endet, dass das Milchgefäß bei eingetauchter Dampflanze in der Aufschäumposition unter dem Milchauslass positioniert ist. Auf diese Weise ist es möglich, das Milchgefäß in der Aufschäumposition zu positionieren und zunächst über den Milchauslass eine portionierte Menge Milch in das Milchgefäß auszugeben, die anschließend durch Dampfausgabe über die in das Milchgefäß bzw. die darin eingefüllte Milch eintauchende Dampflanze aufgeschäumt wird. Da der Milchauslass separat von der Dampflanze angeordnet ist, wird dieser durch den heißen Dampf nicht erhitzt, sodass im Milchauslass verbliebene Milchreste nicht denaturieren und anbacken können. Der Milchauslass kann z.B. als ein von der Front der Heißgetränkezubereitungsvorrichtung abstehendes, nach unten gebogenes Ausgaberohr ausgeführt sein. Das Ausgaberohr kann hierbei vorteilhafterweise auch mit einem Auslasswinkel in Richtung der Dampflanze nach vorne geneigt sein, sodass ausgegebene Milch entlang der Dampflanze in das Milchgefäß läuft.

Außerdem sind erfindungsgemäß an der Heißgetränkezubereitungsvorrichtung mehrere nebeneinander hinter der Dampflanze angeordnete Milchauslässe für unterschiedliche Milchsorten vorgesehen. Über eine Benutzerschnittstelle ist dabei die für einen Aufschäumvorgang verwendete Milchsorte auswählbar. Somit können nicht nur verschiedene Milchsorten wie normale Vollmilch, laktosefreie Milch, fettarme Milch oder ein veganes Milchersatzprodukt (z.B. Sojamilch, Hafermilch, Kokosmilch, Mandelmilch, Erbsenmilch etc) angeboten werden, sondern über die separaten Milchauslässe wird zusätzlich sichergestellt, dass eine Vermischung unterschiedlicher Milchsorten durch in der Milchleitung verbliebene Milchreste der vorangegangenen Milchausgabe vermieden werden. Dies ist insbesondere ein großer Vorteil um streng vegane Produkte anbieten zu können, sowie für Kunden/Konsumenten mit Lebensmittelallergien bzw. -unverträglichkeiten auf bestimmte Milchsorten oder -bestandteile.

Vorzugsweise wird die Heißgetränkezubereitungsvorrichtung mit einer Steuerung versehen, die ausgebildet ist, bei Aktivierung eines Aufschäumvorgangs über den Milchauslass eine portionierte Menge Milch in das in der Aufschäumposition positionierte Milchgefäß auszugeben. Bei herkömmlichen Kaffeemaschinen mit Dampflanze muss die Milch in der Regel vom Bediener manuell in das Milchgefäß eingefüllt werden. Dies geschieht meist großzügig nach Augenmaß, was dazu führt, dass sehr häufig zu viel Milch aufgeschäumt wird, die anschließend verworfen werden muss. Durch eine automatisierte Portionierung wird sichergestellt, dass stets die für ein gewähltes Getränk vorgesehene Milchmenge ausgegeben und anschließend aufgeschäumt wird, sodass keine Reste zurückbleiben oder am Ende gar zu wenig Milch für das gewünschte Getränk aufgeschäumt wird. Die Portionierung kann hierbei über eine Durchflussmessung oder auch durch Vorgabe einer Aktivierungszeit der Milchpumpe, mit der die Milch zum Milchauslass gefördert wird, erfolgen.

Die Steuerung kann weiter dazu ausgebildet sein, im Anschluss an die Milchausgabe eine Dampfausgabe über die Dampflanze freizugeben. Hierdurch wird ein vollständig automatisiertes Aufschäumen möglich, bei dem der Bediener lediglich das Milchgefäß in die Aufschäumposition positioniert und anschließend über eine entsprechende Benutzerschnittstelle, wie etwa einen Touchscreen, den Aufschäumvorgang aktiviert. Die weiteren Schritte der Milchausgabe und der anschließenden Dampfausgabe zum Aufschäumen werden automatisiert von der Steuerung ausgeführt.

Zusätzlich kann vorzugsweise ein mit der Dampflanze zusammenwirkend angeordneter Temperatursensor vorgesehen sein, welcher die Temperatur der in das Milchgefäß eingefüllten Milch während des Aufschäumvorgangs erfasst und an die Steuerung meldet. Die Steuerung kann weiter ausgebildet sein, bei Erreichen einer Solltemperatur die Dampfausgabe zu beenden. Da die Milch zum Beispiel aus einem Milchkühlschrank mit definierter Ausgangstemperatur in das Milchgefäß gefördert wird, hängt die Endtemperatur von der Dampfmenge bzw. Aktivierungszeit der Dampfausgabe ab. Somit kann über den Temperatursensor nicht nur festgestellt werden, ob der Milchschaum die gewünschte Temperatur erreicht hat, sondern es kann auch geschlussfolgert werden, dass die gewünschte Schaumkonsistenz erreicht wurde, welche ebenfalls von der Aktivierungszeit der Dampfausgabe abhängig ist. Der Temperatursensor kann insbesondere am freien Ende der Dampflanze angeordnet sein.

Im Rahmen der Erfindung kann außerdem vorgesehen sein, dass in die Dampflanze eine Luftzuleitung mündet, über welche dem Dampf Luft zum Aufschäumen der Milch zugeführt wird. Durch ein gesteuertes Zuführen von Luft wird das Aufschäumen der Milch verbessert und reproduzierbar sichergestellt, dass bei jedem Aufschäumvorgang immer dieselbe Milchschaumkonsistenz erzielt wird. Insbesondere kann vorgesehen sein, dass in einer ersten Phase während des Aufschäumens dem Dampf Luft beigefügt wird und in einer zweiten Phase die Luftzufuhr geschlossen wird, sodass lediglich Dampf ausgegeben wird, mit dem der Milchschaum weiter verfeinert und die Konsistenz verbessert wird.

Die Luftzufuhr kann in an sich bekannter Weise über ein Luftventil mithilfe des Venturi-Effekts erfolgen. Vorzugsweise ist jedoch in der Luftzuleitung eine Luftpumpe (Kompressor) angeordnet, welche Luft zum Aufschäumen der Milch unter Überdruck zuführt. Die Verwendung einer Luftpumpe ermöglicht eine gute Dosierung der Luftmenge und die Zufuhr der unter Druck stehenden Luft verbessert den Aufschäumvorgang.

Bei einer bevorzugten Weiterbildung der Erfindung kann vorgesehen sein, dass die Dampflanze über ein Gelenk in vertikaler Richtung schwenkbar an der Getränkezubereitungsvorrichtung angeordnet ist. Dies vereinfacht das Positionieren des Milchgefäßes, indem die Dampflanze von oben in das Milchgefäß eingeschwenkt bzw. zusammen mit dem Abstellen des Milchgefäßes heruntergeschwenkt werden kann. Insbesondere bei der Verwendung entsprechend hoher Milchgefäße, durch die ein Verspritzen von Milch verhindert wird, kann somit erreicht werden, dass die Dampflanze weit genug in das Milchgefäß hineinragt, sodass das freie Ende der Dampflanze weit genug in die eingefüllte Milch eintaucht.

Bei einer bevorzugten Ausführungsform kann vorgesehen sein, dass eine zu dem Milchauslass führende Milchleitung über eine Ventilanordnung umschaltbar mit dem Getränkeauslasskopf der Heißgetränkezubereitungsvorrichtung verbindbar ist, um wahlweise Milch in ein unter dem Auslasskopf positioniertes Trinkgefäß oder ein in der Aufschäumposition positioniertes Milchgefäß auszugeben. Somit ist sowohl die Ausgabe eines milchhaltigen Getränks über den Auslasskopf als auch ein separates Aufschäumen von Milch und anschließende manuelle Zugabe des Milchschaums zu dem über den Auslasskopf ausgegebenen Heißgetränk möglich.

Weiter kann vorgesehen sein, dass ein Zulauf der Milchleitung über ein Umschaltventil wahlweise über einen Durchlauferhitzer oder eine den Durchlauferhitzer umgehende Bypassleitung mit einer Milchpumpe verbindbar ist. Somit kann wahlweise über den Durchlauferhitzer erwärmte Milch oder über die Bypassleitung kalte Milch ausgegeben werden. Eine Ausgabe erwärmter Milch ist vorteilhaft, wenn die Milch direkt über den Getränkeauslasskopf einem Heißgetränk zugeführt wird. Die Ausgabe gekühlter Milch über die Bypassleitung ist hingegen vorteilhaft, wenn die Milch über den Milchauslass zum Aufschäumen in das Milchgefäß ausgegeben wird, da mit kalter Milch bessere Aufschäumergebnisse erzielt werden.

Weiter kann vorzugsweise vorgesehen sein, dass in eine mit der Saugseite der Milchpumpe verbundene Fluidleitung ein Luftventil einmündet und in einer mit der Druckseite der Pumpe verbundenen Fluidleitung ein Drosselelement angeordnet ist. Durch ein gesteuertes Zuführen von Luft saugseitig der Milchpumpe und die durch das Drosselelement bewirkte Druckerhöhung in der Pumpe wird bereits in der Milchpumpe Milchschaum erzeugt. Dieser kann anschließend direkt oder über einen Durchlauferhitzer über den Getränkeauslasskopf ausgegeben werden. Wenn hingegen eine Milchausgabe über den Milchauslass in ein Milchgefäß zum separaten Aufschäumen der Milch ausgegeben wird, wird das Luftventil geschlossen, sodass kein Aufschäumen der Milch in der Milchpumpe stattfindet und somit ungeschäumte Milch aus dem Milchauslass austritt. Auf diese Weise kann wahlweise Milchschaum zum Auslasskopf ausgegeben werden (One-Step-Mischgetränke) oder die Milch über die Dampflanze separat aufgeschäumt und anschließend einem über den Auslasskopf ausgegebenen Heißgetränk beigefügt werden (Two-Step-Mischgetränk).

Weitere Vorteile und Ausgestaltungen der Erfindung ergeben sich aus der nachfolgenden Beschreibung eines Ausführungsbeispiels anhand der Figuren. Es zeigt:
- Figur 1: eine Frontansicht einer als Thekengerät ausgeführten Kaffeemaschine mit zwei Kaffeezubereitungseinheiten und einer mittigen Aufschäumeinheit,
- Figur 2: eine Detailansicht der Aufschäumeinheit aus Figur 1,
- Figur 3: ein sogenanntes Wasserlaufschema der Milchwege in der Aufschäumeinheit aus Figur 2 und
- Figur 4: ein Ausführungsbeispiel einer Aufschäumeinheit mit in Richtung der Dampflanze geneigtem Milchauslass.

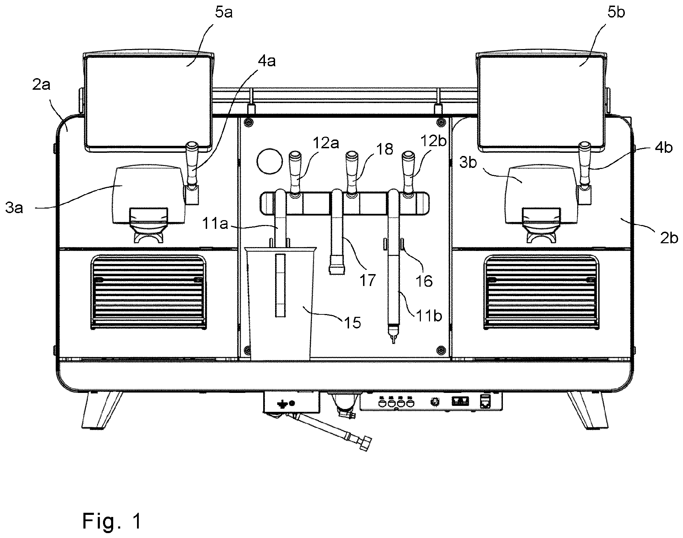

Bei der in Figur 1 gezeigten Kaffeemaschine 1 handelt es sich um ein Thekengerät mit zwei Kaffeezubereitungseinheiten 2a und 2b, die jeweils links und rechts der Kaffeemaschine 1 angeordnet sind. Mittig zwischen den beiden Kaffeezubereitungseinheiten 2a, 2b befindet sich eine Milchaufschäumeinheit 10. Die Kaffeezubereitungseinheiten 2a, 2b sind in der Art eines Kaffeevollautomaten an sich bekannter Bauart mit Wassererhitzer, Brühgruppe und Mahlwerk aufgebaut. Auf den genauen Aufbau muss hier nicht weiter eingegangen werden. In Figur 1 sieht man mittig der jeweiligen Kaffeezubereitungseinheit 2a, 2b den Auslasskopf 3a, 3b, über den frisch gebrühte Kaffeegetränke ausgegeben werden. Ein seitlich am Auslasskopf 3a, 3b angeordneter Bedienhebel 4a, 4b dient zur Beeinflussung eines Brühparameters wie etwa des Drucks oder der Durchflussrate während eines Brühvorgangs. Im oberen Bereich der beiden Kaffeezubereitungseinheiten 2a, 2b ist jeweils eine grafische Benutzerschnittstelle in Form eines Touchscreens 5a, 5b angeordnet. Über diesen kann eine Getränkeauswahl vorgenommen und ein Brühvorgang bzw. Getränkezubereitungsvorgang gestartet werden. Die Getränkezubereitung kann dabei auch in ebenfalls an sich bekannter Weise die Ausgabe von Milch oder Milchschaum über den Auslasskopf 3a, 3b umfassen. Hierzu ist die Kaffeemaschine 1 mit einem in Figur 1 nicht dargestellten Milchkühlschrank verbunden, der mehrere Milchbehälter umfasst, aus denen mittels einer Milchpumpe Milch gefördert werden kann. Ein mit der Kaffeemaschine verwendbarer Milchkühlschrank ist in der WO 2021/074038 A1 beschrieben, auf die zur Vermeidung unnötiger Wiederholungen hiermit vollinhaltlich Bezug genommen wird.

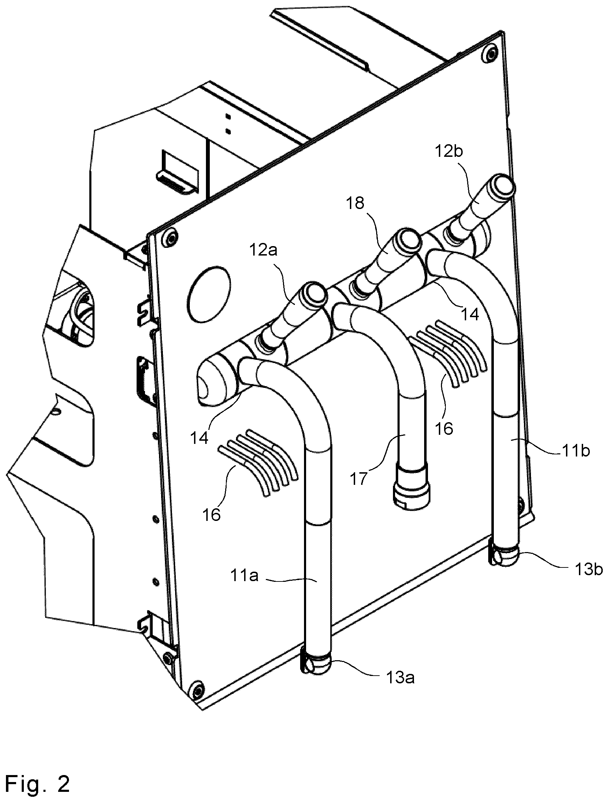

Im Rahmen der vorliegenden Erfindung von Interesse ist insbesondere das mittlere Modul der Kaffeemaschine 1, die Aufschäumeinheit 10, deren Frontpartie in Figur 2 näher dargestellt ist. Die Aufschäumeinheit dient zum manuellen bzw. separaten Aufschäumen von Milch in einem Aufschäumgefäß 15, etwa einer Milchkanne oder einem hohen Bechergefäß. Hierzu besitzt die Aufschäumeinheit 10 zwei Dampflanzen 11a, 11b (eine Dampflanze wird häufig auch als Dampfrohr bezeichnet), über die durch Betätigung eines zugehörigen Bedienhebels 12a, 12b Dampf bzw. mit Luft vermischter Dampf zum Aufschäumen von in dem Aufschäumgefäß 15 aufgenommener Milch ausgegeben werden kann. Am freien Ende der Dampflanze 11a, 11b befindet sich jeweils eine Aufschäumdüse 13a, 13b. Die Dampflanzen 11a, 11b sind jeweils über ein Schwenkgelenk 14a, 14b an der Frontblende der Aufschäumeinheit 10 angelenkt, sodass sie von oben in das in seiner Aufschäumposition befindliche Aufschäumgefäß 15 heruntergeschwenkt werden können. Hinter den beiden Dampflanzen 11a, 11b befinden sich jeweils vier Milchauslässe 16, über die unterschiedliche Milchsorten in das Aufschäumgefäß 15 ausgegeben werden können. Zwischen den beiden Dampflanzen 11a, 11b befindet sich ein Heißwasserausgaberohr 17 mit zugehörigem Betätigungshebel 18, über welches Heißwasser zum Vorwärmen von Tassen oder zum Zubereiten von Tee oder anderen Getränken ausgegeben werden kann.

Die Ausgabe von Milch über die Milchauslässe 16 sowie ein anschließender Aufschäumvorgang können über die grafischen Benutzerschnittstellen 5a, 5b der Kaffeemaschine 1 gesteuert werden, wobei zweckmäßigerweise der linke Touchscreen 5a der linken Dampflanze 11a und der rechte Touchscreen 5b der rechten Dampflanze 11b steuerungstechnisch zugeordnet ist.

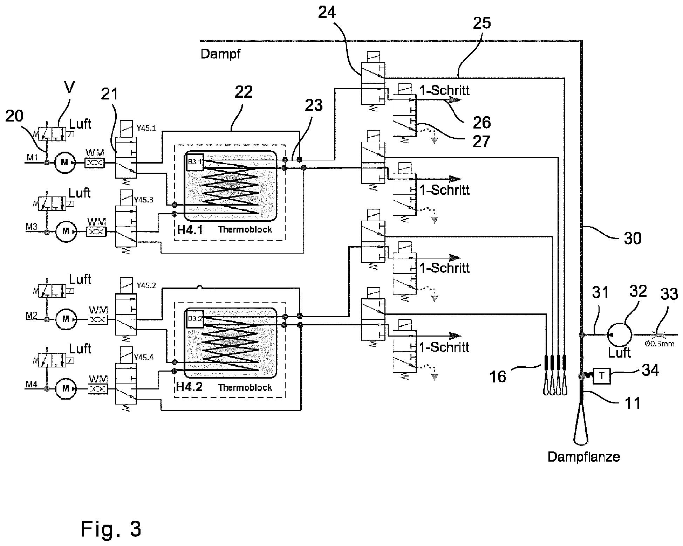

Der Verlauf der Milchleitungen zu und in der Aufschäumeinheit 10 ist in dem in Figur 3 dargestellten Wasserlaufschema gezeigt. In dem Wasserlaufschema sind vier Milchansaugleitungen M1, M2, M3, M4 dargestellt, die mit vier Milchbehältern im Milchkühlschrank (nicht gezeigt) verbunden werden. Die Milchwege von den Ansaugleitungen bis zu dem zugehörigen Milchauslass 16 sind grundsätzlich identisch aufgebaut, sodass der Aufbau hier beispielhaft nur am oberen Milchweg beschrieben wird.

In jede der Ansaugleitungen M1 bis M4 mündet jeweils eine Luftzuleitung 20, die mit einem Luftventil V versehen ist. Das Luftventil V kann geschlossen oder geöffnet werden, um die Luftzufuhr abzusperren oder freizugeben. Zum Zuführen einer definierten Luftmenge kann das Luftventil V auch getaktet d.h. intermittierend betrieben werden, wobei über die Taktfrequenz und/oder das Tastverhältnis die Luftmenge dosiert werden kann. Die Milchansaugleitungen M1 bis M4 sind jeweils mit der Ansaugseite einer Milchpumpe M verbunden. Ausgangsseitig sind die Milchpumpen M jeweils mit einem Drosselelement WM in Form einer festen Blende oder, wie hier, einem Wendelmischer verbunden, der als Druckerhöhungselement dient. Hinter dem Drosselelement WM befindet sich jeweils ein Umschaltventil 21 in Form eines 3/2-Wegeventils. Das Umschaltventil 21 dient dazu, den Milchstrom entweder über einen Durchlauferhitzer in Form eines Thermoblocks H4 oder eine den Thermoblock H4 umgehende Bypassleitung 22 in Richtung des zugehörigen Milchauslasses 16 zu leiten. Für die vier parallelen Milchleitungen sind insgesamt zwei Thermoblöcke H4.1, H4.2 vorgesehen, die jeweils zwei getrennte Fluidwege aufweisen. Ein solcher Durchlauferhitzer ist in der DE 20 2021 101 017 U1 beschrieben, auf die zur Vermeidung unnötiger Wiederholungen hiermit vollinhaltlich Bezug genommen wird.

Hinter dem Durchlauferhitzer H4 führen die Bypassleitung 22 und der durch den Durchlauferhitzer führende Strömungsweg 23 wieder zusammen und zu einem weiteren Umschaltventil in Form eines 3/2-Wegeventils 24. Über das Umschaltventil 24 kann der Milchfluss zwischen dem Milchauslass 16 und einer direkten Ausgabe über den Auslasskopf 3a oder 3b der Kaffeemaschine umgeschaltet werden. Somit kann die Milch entweder über die Leitung 25 zu dem zugehörigen Milchauslass 16 geführt oder durch Umschalten des Ventils 24 der Milchstrom über eine zu dem Auslasskopf 3a oder 3b führende Auslassleitung 26 geführt werden. In der Auslassleitung 26 ist zusätzlich noch ein Drainageventil 27 angeordnet, über welches die Milchleitung zur Entleerung und zum Durchführen eines Spülvorgangs direkt mit einem Ablauf verbunden werden kann.

In Figur 3 ist zusätzlich die Dampfleitung 30 gezeigt, die zu der Dampflanze 11 führt. Die Dampfleitung 30 ist mit einem in der Figur nicht dargestellten Dampfbereiter in Form eines Druckboilers oder eines Durchlauferhitzers für Dampf verbunden. In die Dampfleitung 30 mündet eine Luftzuleitung 31, die mit einer Luftpumpe 32 verbunden ist. Einlassseitig ist die Luftpumpe 32 über eine Blende 33 mit einer Luftansaugöffnung verbunden. Durch Betrieb der Luftpumpe 32 kann dem Dampf in der Dampfleitung 30 somit gezielt Luft zugeführt werden. Mit der Dampflanze 11 ist außerdem ein Temperatursensor 34 verbunden, der zusammen mit der Dampflanze 11 in ein darunter positioniertes Aufschäumgefäß 15 eintaucht und die Temperatur darin aufgenommener Milch während des Aufschäumvorgangs misst.

Die in Figur 3 gezeigte Schaltung ist in der Kaffeemaschine 1 zweimal vorhanden, jeweils einmal für jede der Dampflanzen 11a, 11b und die zugehörigen, dahinter angeordneten Milchauslässe 16. Die Ansteuerung der in Figur 3 gezeigten Komponenten erfolgt über eine Steuerungseinheit der Kaffeemaschine 1 sowie die zugeordnete Benutzerschnittstelle 5a bzw. 5b. Soll beispielsweise über den Auslasskopf 3a ein Kaffeegetränk mit Milchschaum ausgegeben werden, so wird zur Erzeugung des Milchschaums die zu der über den Touchscreen 5a ausgewählten Milchsorte (M1 bis M4) zugehörige Milchpumpe in Betrieb gesetzt und über das Luftventil V Luft saugseitig der Pumpe M zugeführt. Das Ventil 21 wird in die untere Schaltstellung geschaltet, sodass der Milchfluss durch den Thermoblock H4 geleitet wird. Das Ventil 24 wird ebenfalls in die untere Schaltstellung geschaltet, sodass Milchschaum über die Leitung 26 am Auslasskopf 3a ausgegeben wird. Das Drainageventil 27 befindet sich jetzt in der oberen Schaltstellung.

Soll hingegen in dem Aufschäumgefäß 15 separat Milchschaum erzeugt werden, so wird ebenfalls über die zugehörige Milchpumpe M Milch gefördert. Das Ventil 21 wird in die obere Schaltstellung geschaltet, sodass der Milchfluss über die Bypassleitung 22 geleitet wird. Das Ventil 24 wird in die obere Schaltstellung verschaltet, sodass der Milchfluss über die Milchleitung 25 zum zugehörigen Milchauslass 16 geleitet wird und in ein darunter platziertes Aufschäumgefäß 15 ausgegeben wird. Anschließend wird über die Dampfleitung 30 und die daran angeschlossene Dampflanze 11a Dampf ausgegeben und über die Luftpumpe 32 dem Dampf Luft zugeführt, sodass die Milch in dem darunter platzierten Aufschäumgefäß 15 aufgeschäumt wird. Erreicht die Milchtemperatur, welche über den Temperatursensor 34 am Ende der Dampflanze 11a gemessen wird, einen Sollwert, z.B. 50°C, so signalisiert die, dass die Milch fertig aufgeschäumt ist und die Dampfausgabe wird beendet.

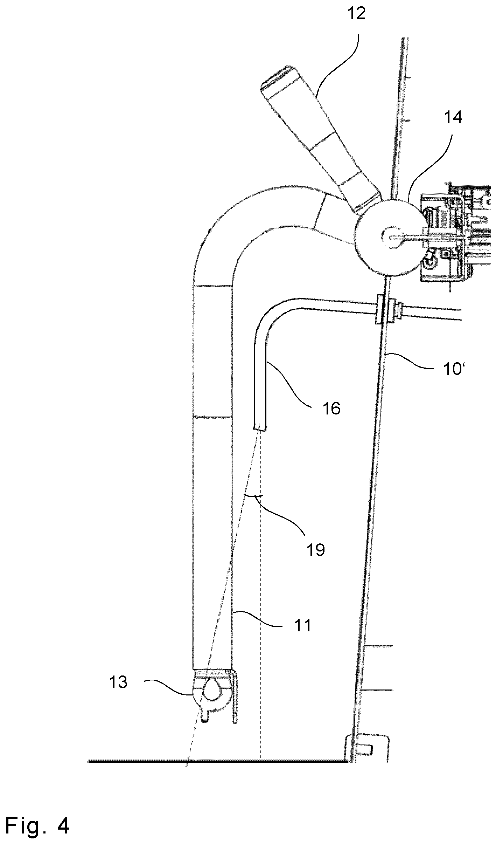

In Figur 4 ist ein abgewandeltes Ausführungsbeispiel gezeigt, bei dem der Milchauslass 16 als ein von der Front 10' der Aufschäumeinheit 10 abstehendes, nach unten gebogenes Ausgaberohr ausgeführt ist, wobei das Ausgaberohr mit einem Auslasswinkel 19 in Richtung der Dampflanze 11 nach vorne geneigt ist, sodass ausgegebene Milch entlang der Dampflanze 11 in ein darunter positioniertes Milchgefäß läuft. Der in Richtung der Front weisende Umfangsbereich der Dampflanze 11 kann hierbei auch abgeflacht oder leicht konkav ausgeführt sein, um den Milchstrom an seiner Außenseite besser entlang zu führen. Der Auslasswinkel kann beispielsweise zwischen 10° und 20° gegenüber der Senkrechten betragen. Die Dampflanze 11 ist wie zuvor über das Gelenk 14 in vertikaler Richtung schwenkbar und besitzt an ihrem freien Ende eine Aufschäumdüse 13. Durch Betätigung des Bedienhebels 12 kann Dampf bzw. mit Luft vermischter Dampf zum Aufschäumen von in dem Aufschäumgefäß 15 aufgenommener Milch ausgegeben werden.

## Patentansprüche

1. Heißgetränkezubereitungsvorrichtung (1) mit einer Dampflanze (11; 11a, 11b) zum Aufschäumen von in ein Milchgefäß (15) eingefüllter Milch oder Milchersatzprodukt, wobei das Milchgefäß (15) so in einer Aufschäumposition vor der Heißgetränkezubereitungsvorrichtung (1) positioniert werden kann, dass die Dampflanze (11; 11a, 11b) in das Milchgefäß (15) eintaucht, und mit mindestens einem mit der Dampflanze (11; 11a, 11b) zusammenwirkend angeordnetem Milchauslass (16), über den Milch oder Milchersatzprodukt in das in der Aufschäumposition positionierte Milchgefäß (15) ausgegeben werden kann,
wobei der Milchauslass (16) räumlich getrennt von der Dampflanze (11; 11a, 11b) angeordnet ist und derart oberhalb des freien Endes der Dampflanze (11; 11a, 11b) endet, dass das Milchgefäß (15) bei eingetauchter Dampflanze (11; 11a, 11b) in der Aufschäumposition unter dem Milchauslass (16) positioniert ist,
**dadurch gekennzeichnet, dass**
die Heißgetränkezubereitungsvorrichtung (1) einen Getränkeauslasskopf (3a, 3b) zur Ausgabe zubereiteter Heißgetränke und mehrere nebeneinander und in Frontansicht der Heißgetränkezubereitungsvorrichtung (1) hinter der Dampflanze (11; 11a, 11b) angeordnete Milchauslässe (16) für unterschiedliche Milchsorten aufweist, wobei die Dampflanze von dem Getränkeauslasskopf (3a, 3b) separat ausgebildet ist und wobei die für einen Aufschäumvorgang verwendete Milchsorte über eine Benutzerschnittstelle (5a, 5b) auswählbar ist.

2. Heißgetränkezubereitungsvorrichtung (1) nach Anspruch 1 mit einer Steuerung, die ausgebildet ist, bei Aktivierung eines Aufschäumvorgangs über den Milchauslass (16) eine portionierte Menge Milch oder Milchersatzprodukt in das in der Aufschäumposition positionierte Milchgefäß (15) auszugeben.

3. Heißgetränkezubereitungsvorrichtung (1) nach Anspruch 2, bei der die Steuerung weiter ausgebildet ist, im Anschluss an die Milchausgabe eine Dampfausgabe über die Dampflanze (11; 11a, 11b) freizugeben.

4. Heißgetränkezubereitungsvorrichtung (1) nach Anspruch 2 oder 3 mit einem mit der Dampflanze (11; 11a, 11b) zusammenwirkend angeordneten Temperatursensor (34), welcher die Temperatur der in das Milchgefäß (15) eingefüllten Milch oder Milchersatzprodukt während des Aufschäumvorgangs erfasst und an die Steuerung meldet, wobei die Steuerung weiter ausgebildet ist, bei Erreichen einer Solltemperatur die Dampfausgabe zu beenden.

5. Heißgetränkezubereitungsvorrichtung (1) nach einem der vorangehenden Ansprüche, bei der in die Dampflanze (11; 11a, 11b) eine Luftzuleitung (31) mündet, über welche dem Dampf Luft zum Aufschäumen der Milch oder Milchersatzprodukt zugeführt wird.

6. Heißgetränkezubereitungsvorrichtung (1) nach Anspruch 5, bei der in der Luftzuleitung (31) eine Luftpumpe (32) angeordnet ist, welche Luft zum Aufschäumen der Milch oder Milchersatzprodukt unter Überdruck zuführt.

7. Heißgetränkezubereitungsvorrichtung (1) nach einem der vorangehenden Ansprüche, bei der in die Dampflanze (11; 11a, 11b) über ein Gelenk (14) in vertikaler Richtung schwenkbar an der Heißgetränkezubereitungsvorrichtung (1) angeordnet ist.

8. Heißgetränkezubereitungsvorrichtung (1) nach einem der vorangehenden Ansprüche, bei der eine zu dem Milchauslass (16) führende Milchleitung (22, 23) über eine Ventilanordnung (24) umschaltbar mit dem Getränkeauslasskopf (3a, 3b) verbindbar ist, um wahlweise Milch oder Milchersatzprodukt in ein unter dem Auslasskopf (3a, 3b) positioniertes Trinkgefäß auszugeben.

9. Heißgetränkezubereitungsvorrichtung (1) nach Anspruch 8, bei der ein Zulauf der Milchleitung (22, 23) über ein Umschaltventil (21) wahlweise über einem Durchlauferhitzer (H4.1, H4.2) oder eine den Durchlauferhitzer (H4.1, H4.2) umgehenden Bypassleitung (22) mit einer Milchpumpe (M) verbindbar ist.

10. Heißgetränkezubereitungsvorrichtung (1) nach Anspruch 9, bei der in eine mit der Saugseite der Milchpumpe (M) verbundenen Fluidleitung (M1-M4) ein Luftventil (V) einmündet und in einer mit der Druckseite der Milchpumpe (M) verbundenen Fluidleitung ein Drosselelement (WM) angeordnet ist.

11. Heißgetränkezubereitungsvorrichtung (1) nach Anspruch 10, bei der das Luftventil (V) derart angesteuert ist, dass dieses für einen Aufschäumvorgang mittels der Dampflanze (11; 11a, 11b) in einen geschlossenen Zustand geschaltet ist und während es bei einer Ausgabe von geschäumter Milch oder Milchersatzprodukt über den Auslasskopf (3a, 3b) zumindest zeitweise in einen geöffneten Zustand geschaltet ist.

12. Heißgetränkezubereitungsvorrichtung (1) nach einem der vorangehenden Ansprüche, bei der der Milchauslass (16). als ein von der Front (10') der Heißgetränkezubereitungsvorrichtung (1) abstehendes, nach unten gebogenes Ausgaberohr ausgeführt ist, insbesondere bei dem das Ausgaberohr mit einem Auslasswinkel (19) in Richtung der Dampflanze (11) nach vorne geneigt sein, sodass ausgegebene Milch entlang der Dampflanze in ein darunter positioniertes Milchgefäß (15) läuft.

## Claims

1. Hot beverage preparation device (1) with a steam wand (11; 11a, 11b) for frothing milk or a milk substitute product poured into a milk vessel (15), wherein the milk vessel (15) can be positioned in a frothing position in front of the hot beverage preparation device (1) so that the steam wand (11; 11a, 11b) is immersed in the milk vessel (15), and with at least one milk outlet (16) arranged to interact with the steam wand (11; 11a, 11b), via which milk or a milk substitute product can be dispensed into the milk vessel (15) positioned in the frothing position,
wherein the milk outlet (16) is arranged spatially separated from the steam wand (11; 11a, 11b) and ends above the free end of the steam wand (11; 11a, 11b) in such a way that the milk vessel (15) is positioned under the milk outlet (16) in the frothing position when the steam wand (11; 11a, 11b) is immersed,
**characterized in that**
the hot beverage preparation device (1) has a beverage outlet head (3a, 3b) for dispensing prepared hot beverages and multiple milk outlets (16) for different types of milk arranged side by side and in a front view of the hot beverage preparation device (1) behind the steam wand (11; 11a, 11b), wherein the steam wand is configured separately from the beverage outlet head (3a, 3b), and wherein the type of milk used for a frothing process can be selected via a user interface (5a, 5b).

2. Hot beverage preparation device (1) according to claim 1 with a controller that is configured to dispense a portioned amount of milk or milk substitute product via the milk outlet (16) into the milk vessel (15) positioned in the frothing position when a frothing process is activated.

3. Hot beverage preparation device (1) according to claim 2, wherein the controller is further configured to enable steam dispensing via the steam wand (11; 11a, 11b) following the milk dispensing.

4. Hot beverage preparation device (1) according to claim 2 or 3 with a temperature sensor (34) arranged to interact with the steam wand (11; 11a, 11b), which detects the temperature of the milk or milk substitute product filled into the milk vessel (15) during the frothing process and reports it to the controller, wherein the controller is further configured to stop the steam dispensing when a target temperature is reached.

5. Hot beverage preparation device (1) according to any one of the preceding claims, in which an air supply line (31) opens into the steam wand (11; 11a, 11b), via which air is supplied to the steam for frothing the milk or milk substitute product.

6. Hot beverage preparation device (1) according to claim 5, in which an air pump (32) is arranged in the air supply line (31), which supplies air for frothing the milk or milk substitute product under positive pressure.

7. Hot beverage preparation device (1) according to any one of the preceding claims, in which the steam wand (11; 11a, 11b) is arranged in the pivotable manner via a joint (14) in the vertical direction on the hot beverage preparation device (1).

8. Hot beverage preparation device (1) according to any one of the preceding claims, in which a milk line (22, 23) leading to the milk outlet (16) can be connected to the beverage outlet head (3a, 3b) in a switchable manner via a valve assembly (24) in order to dispense either milk or a milk substitute product into a drinking vessel positioned under the outlet head (3a, 3b).

9. Hot beverage preparation device (1) according to claim 8, in which an inlet of the milk line (22, 23) can be connected to a milk pump (M) via a changeover valve (21), either via an instantaneous water heater (H4.1, H4.2) or via a bypass line (22) bypassing the instantaneous water heater (H4.1, H4.2).

10. Hot beverage preparation device (1) according to claim 9, in which an air valve (V) opens into a fluid line (M1-M4) connected to the suction side of the milk pump (M) and a throttle element (WM) is arranged in a fluid line connected to the pressure side of the milk pump (M).

11. Hot beverage preparation device (1) according to claim 10, in which the air valve (V) is controlled in such a way that it is switched to a closed state for a frothing process by means of the steam wand (11; 11a, 11b) and is switched to an open state at least temporarily during dispensing of frothed milk or milk substitute product via the outlet head (3a, 3b).

12. Hot beverage preparation device (1) according to any one of the preceding claims, in which the milk outlet (16) is executed as a downwardly curved dispensing tube protruding from the front (10') of the hot beverage preparation device (1), in particular in which the dispensing tube is inclined forward at an outlet angle (19) in the direction of the steam wand (11), so that dispensed milk flows along the steam wand into a milk vessel (15) positioned underneath.

## Revendications

1. Dispositif de préparation de boissons chaudes (1) avec une buse à vapeur (11 ; 11a, 11b) pour faire mousser du lait ou un substitut de lait versé dans un récipient à lait (15), dans lequel le récipient à lait (15) peut être positionné dans une position de moussage devant l'appareil de préparation de boissons chaudes (1) de sorte que la lance à vapeur (11 ; 11a, 11b) plonge dans le récipient à lait (15), et avec au moins une sortie de lait (16) disposée en coopération avec la buse à vapeur (11 ; 11a, 11b), par laquelle du lait ou un substitut de lait peut être distribué dans le récipient à lait (15) positionné en position de moussage,
dans lequel la sortie de lait (16) est disposée séparément de la lance à vapeur (11 ; 11a, 11b) et se termine au-dessus de l'extrémité libre de la lance à vapeur (11 ; 11a, 11b) de sorte que le récipient à lait (15), lorsque la lance à vapeur (11 ; 11a, 11b) est plongée, est positionné sous la sortie de lait (16),
**caractérisé en ce que**
le dispositif de préparation de boissons chaudes (1) présente une tête de distribution de boissons (3a, 3b) pour la distribution de boissons chaudes préparées et plusieurs sorties de lait (16) disposées côte à côte et, en vue de face du dispositif de préparation de boissons chaudes (1), derrière la lance à vapeur (11 ; 11a, 11b) pour différents types de lait, dans lequel la lance à vapeur est conçue de manière séparée de la tête de distribution de boissons (3a, 3b) et dans lequel le type de lait utilisé pour un processus de moussage peut être sélectionné par l'intermédiaire d'une interface utilisateur (5a, 5b).

2. Dispositif de préparation de boissons chaudes (1) selon la revendication 1, avec un dispositif de commande qui est conçue pour, lors de l'activation d'un processus de moussage par l'intermédiaire de la sortie de lait (16), distribuer une quantité dosée de lait ou de substitut de lait dans le récipient à lait (15) positionné en position de moussage.

3. Dispositif de préparation de boissons chaudes (1) selon la revendication 2, dans lequel le dispositif de commande est en outre conçue pour autoriser, à la suite de la distribution de lait, une distribution de vapeur par la lance à vapeur (11 ; 11a, 11b).

4. Dispositif de préparation de boissons chaudes (1) selon la revendication 2 ou 3, avec un capteur de température (34) disposé de manière à coopérer avec la lance à vapeur (11 ; 11a, 11b), lequel détecte la température du lait ou du substitut de lait versé dans le récipient à lait (15) pendant le processus de moussage et la transmet au dispositif de commande , dans lequel le dispositif de commande est en outre conçue pour interrompre la distribution de vapeur lorsqu'une température de consigne est atteinte.

5. Dispositif de préparation de boissons chaudes (1) selon l'une quelconque des revendications précédentes, dans lequel une conduite d'air (31) débouche dans la lance à vapeur (11 ; 11a, 11b), par l'intermédiaire de laquelle de l'air est acheminé vers la vapeur pour faire mousser le lait ou le substitut de lait.

6. Dispositif de préparation de boissons chaudes (1) selon la revendication 5, dans lequel une pompe à air (32) est disposée dans la conduite d'alimentation en air (31), laquelle achemine de l'air sous surpression pour faire mousser le lait ou le substitut de lait.

7. Dispositif de préparation de boissons chaudes (1) selon l'une quelconque des revendications précédentes, dans lequel la lance à vapeur (11 ; 11a, 11b) est disposée sur le dispositif de préparation de boissons chaudes (1) de manière pivotante en direction verticale par l'intermédiaire d'une articulation (14).

8. Dispositif de préparation de boissons chaudes (1) selon l'une quelconque des revendications précédentes, dans lequel une conduite de lait (22, 23) menant à la sortie de lait (16) peut être connectée par l'intermédiaire d'un agencement de vanne (24) de manière commutable à la tête de sortie de boisson (3a, 3b) pour distribuer au choix du lait ou un substitut de lait dans un récipient positionné sous la tête de distribution (3a, 3b).

9. Dispositif de préparation de boissons chaudes (1) selon la revendication 8, dans lequel une arrivée de la conduite de lait (22, 23) peut être connectée, par l'intermédiaire d'une vanne de commutation (21), au choix à un chauffe-eau instantané (H4.1, H4.2) ou à une conduite de dérivation (22) contournant le chauffe-eau instantané (H4.1, H4.2) à une pompe à lait (M).

10. Dispositif de préparation de boissons chaudes (1) selon la revendication 9, dans lequel une vanne d'air (V) débouche dans une conduite de fluide (M1-M4) connectée au côté aspiration de la pompe à lait (M) et un élément d'étranglement (WM) est disposé dans une conduite de fluide connectée au côté refoulement de la pompe à lait (M).

11. Dispositif de préparation de boissons chaudes (1) selon la revendication 10, dans lequel la vanne d'air (V) est commandée de sorte que celle-ci est commutée dans une position fermée pour un processus de moussage au moyen de la lance à vapeur (11 ; 11a, 11b) et, lors d'une distribution de lait moussé ou de substitut de lait par la tête de sortie (3a, 3b), est commutée au moins temporairement dans une position ouverte.

12. Dispositif de préparation de boissons chaudes (1) selon l'une quelconque des revendications précédentes, dans lequel la sortie de lait (16) est réalisée en tant que tube de distribution courbé vers le bas s'étendant à partir de l'avant (10') du dispositif de préparation de boissons chaudes (1), en particulier dans lequel le tube de distribution est incliné vers l'avant selon un angle de sortie (19) en direction de la lance à vapeur (11), de sorte que le lait distribué s'écoule le long de la lance à vapeur dans un récipient à lait (15) positionné en dessous.
